# EUROPÄISCHE PATENTSCHRIFT

(11) **EP 1 681 374 B1**
(45) Veröffentlichungstag und Bekanntmachung des Hinweises auf die Patenterteilung: **26.08.2009**
(21) Anmeldenummer: 05000730.1
(22) Anmeldetag: 14.01.2005
(51) Int. Cl.: C23C 28/00, C23C 10/28, C25D 3/02, F01D 5/28

(54) **Schichtsystem mit Sperrschicht und Verfahren zur Herstellung**
Coating system with barrier layer and process of manufacture
Système de revêtement comprenant une couche barrière et procédé de fabrication

(43) Veröffentlichungstag der Anmeldung: 19.07.2006
(73) Patentinhaber: SIEMENS AKTIENGESELLSCHAFT, 80333 München (DE)
(72) Erfinder: Halberstadt, Knut, 45481 Mülheim an der Ruhr (DE); Stamm, Werner, Dr., 45481 Mülheim an der Ruhr (DE)

(56) Entgegenhaltungen:
- EP-A- 0 480 404
- EP-A- 0 997 546
- WO-A-94/07004
- US-A- 3 578 743
- US-A- 5 100 486
- US-A1- 2003 211 239
- LI M ET AL: "Thermodynamic assessment of the Al-Pd system" INTERMETALLICS, [Online] Bd. xx, 27. Juni 2005 (2005-06-27), Seiten 1-8, XP002340593 ELSEVIER SCIENCE PUBLISHERS B.V., GB ISSN: 0966-9795 Gefunden im Internet: URL:http://www.sciencedirect.com/science?_ ob=QuickSearchListURL&_method=list&_aset=V -WA-A-W-W-MsSAYVW-UUW-U-AAWZVBUVUE-AAWVUAA WUE-WYUBDAZDB-W-U&_sort=d&view=c&_st=13&_a cct=C000049880&_version=1&_userid=987766&m d5=c025beba6c62aa567c52fe0a5306dc75> [gefunden am 2005-08-12]
- LAKS B. ET AL: 'Magnetic properties of PrAl2 and NdAl2' INTERNATIONAL CONFERENCE ON MAGNETISM (ICM 2003) 27 JULY - 01 AUGUST 2003 - SYMPOSIUM 1U: RARE EARTH SYSTEMS I 2003, ROMA [IT], Seite 1-U-PM-17
- 'Verformungsmechanismen mehrphasiger TiAl-Legierungen mit Korngrößen im Submikronbereich' FORSCHUNGSBERICHT 2000 - 2001, [Online] TU HARBURG [DE], Gefunden im Internet: <URL:http://tu-harburg.de/forschung/fobe/20 00-2001/a1998.5-06/w.7096040124846...>
- SASTRY V.S.; SURYANARAYANA C.: 'An electron diffraction study of a metastable Al2Pd phase' JOURNAL OF THE LESS-COMMON METALS Bd. 63, 1979, ELSEVIER-SEQUOIA S.A., LAUSANNE [CH], Seiten P89 - P91
- WATSON R.E.; WEINERT M.; ALATALO M.: 'Transition-Metal aluminide formation: The 4d aluminides' PHYSICAL REVIEW B Bd. 65, 29 November 2001, THE AMERICAN PHYSICAL SOCIETY [US], Seiten 014103-1 - 014103-7

## Beschreibung

Die Erfindung betrifft ein Schichtsystem mit einer Sperrschicht gemäß dem Oberbegriff des Anspruchs 1 und Verfahren zur Herstellung gemäß Anspruch 12 und 15.

Bauteile für Anwendungen bei hohen Temperaturen, insbesondere in Turbinen weisen Korrosionsschutzschichten des Typs MCrAlX auf, wobei das Aluminium der MCrAlX-Legierung auf der Oberfläche der Schutzschicht eine schützende Oxidschicht bildet. Das Aluminium aus dieser Schutzschicht diffundiert aber auch in den Grundwerkstoff hinein. Dies ist aber nicht erwünscht, so dass es Aufgabe der Erfindung ist, dieses Problem zu überwinden.

Die US 4,477,538, die JP 11 12 46 88A, die US 5,427,866, die DE 198 42 417 weisen metallische Schichten aus Platin oder Palladium auf, die zwischen Substrat und Schutzschicht oder äußerer Schicht vorhanden sind. US-A-5 100 486 und EP-A-0 480 404 offenbaren Schichtsysteme mit intermetallischen Schichten aus Niob- und/oder Tantalaluminiden.

Die Aufgabe wird gelöst durch ein Schichtsystem gemäß Anspruch 1 und Verfahren gemäß Anspruch 12 und 15.

Das so hergestellte Schichtsystem weist einen verbesserten Korrosionsschutz auf, da das Aluminium weniger oder kaum noch in den Grundwerkstoff hineindiffundiert und so gegenüber dem Stand der Technik eine zeitlich reduzierte Verarmung an Aluminium in der Korrosionsschutzschicht stattfindet.
Ebenso diffundieren weniger Elemente aus dem Grundwerkstoff in die Korrosionsschutzschicht. Dies wird ermöglicht durch eine verbesserte Wirkung der Sperrschicht als Diffusionssperre.

In den Unteransprüchen sind weitere vorteilhafte Maßnahmen zur Verbesserung des Schichtsystems angegeben.

Die in den Unteransprüchen aufgelisteten Maßnahmen können beliebig in vorteilhafter Art und Weise miteinander verknüpft werden.

Es zeigen
- Figur 1: ein erfindungsgemäßes Schichtsystem,
- Figur 2: eine Turbinenschaufel,
- Figur 3: eine Brennkammer,
- Figur 4: eine Gasturbine.

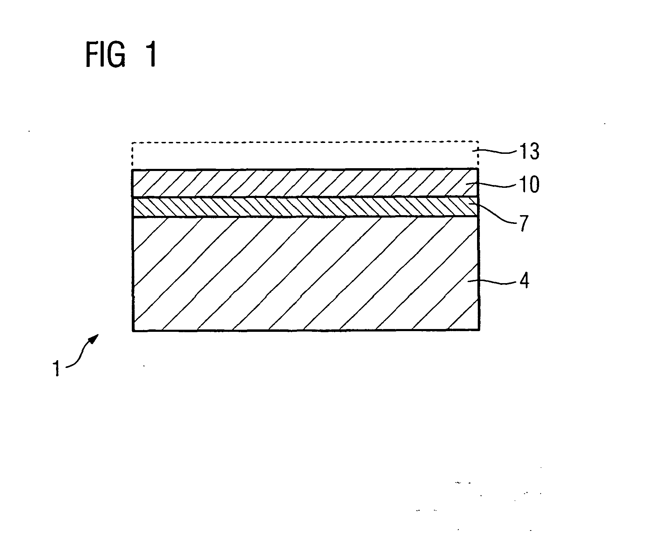

Figur 1 zeigt ein erfindungsgemäßes Schichtsystem 1.

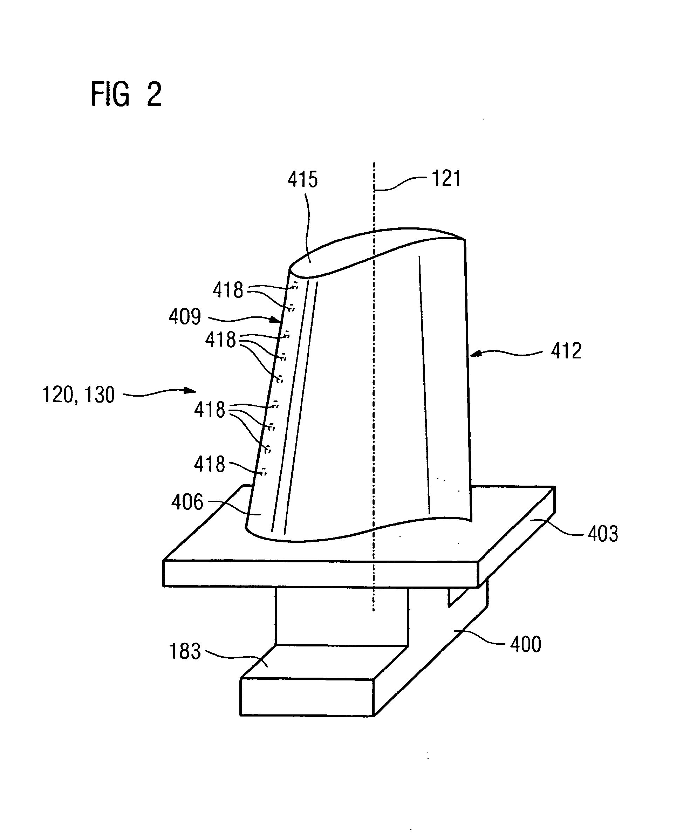

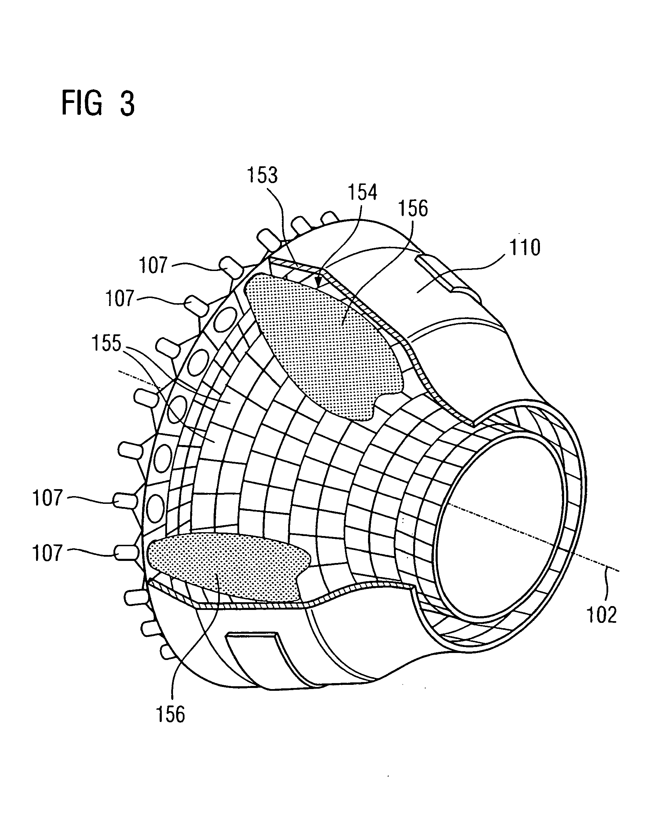

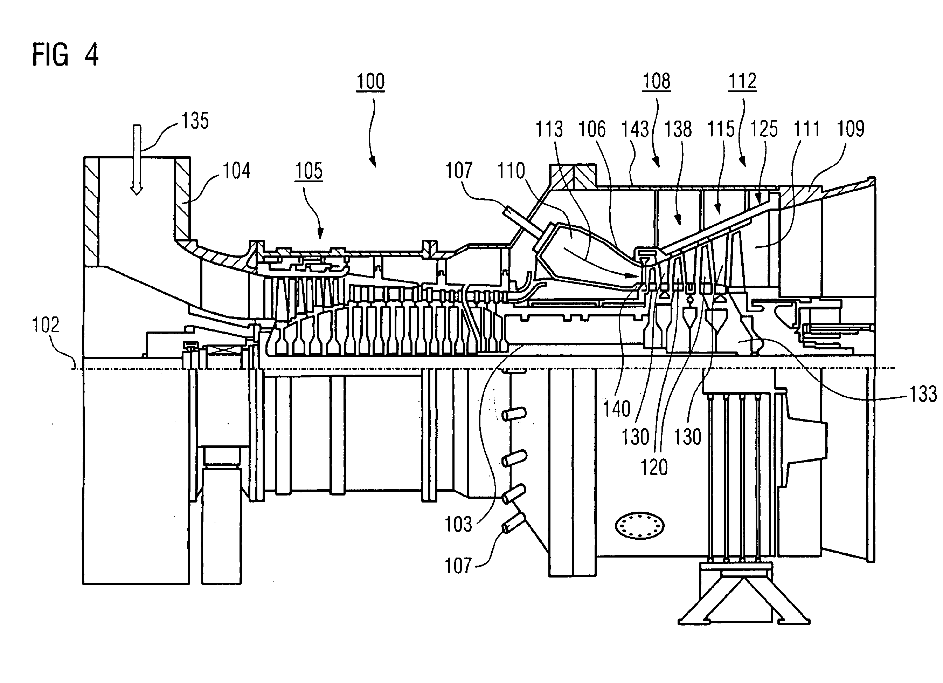

Das Schichtsystem 1 ist beispielsweise ein Bauteil einer Turbine, wie z.B. einer Dampf- oder Gasturbine 100 (Figur 4) für ein Flugzeug oder ein Kraftwerk und ist dabei insbesondere eine Turbinenschaufel 120, 130 (Figur 2) oder ein Hitzeschildelement 155 (Figur 3).

Das Substrat 4 besteht insbesondere bei Bauteilen für Turbinen aus einer nickel-, kobalt- oder eisenbasierten Superlegierung.

Auf dem Substrat 4 ist in bekannter Weise zumindest eine Schutzschicht 10 vorhanden, die insbesondere vom Typ MCrAlX ist.

Gegebenenfalls kann auf dieser Schutzschicht 10 für Anwendungen bei besonders hohen Temperaturen noch eine keramische Wärmedämmschicht 13 vorhanden sein (gestrichelt angedeutet), wobei dann die Schutzschicht 10 nicht nur eine Schutzschicht gegen Oxidation und/oder Korrosion darstellt, sondern auch eine Haftvermittlerschicht der keramischen Wärmedämmschicht 13 an das Substrat 4.

Erfindungsgemäß ist zwischen der Schutzschicht 10 und dem Substrat 4 eine Sperrschicht 7 vorhanden, die zumindest teilweise eine intermetallische Phase ausgewählt aus der Gruppe Ta₂Al, NbAl₂ oder Nb₃Al aufweist. Diese intermetallischen Phasen verhindern eine Diffusion von Aluminium aus der Schutzschicht 7 in das Substrat 4 hinein.

Intermetallische Legierungen (Phasen) weisen eine Kristallstruktur auf, die gegenüber den beiden oder mehreren Legierungskomponenten völlig andere Eigenschaften aufweist und in einem eigenen Gittertyp kristallisieren, der mit den Strukturen der beteiligten Metalle nicht übereinstimmt. Diese intermetallischen Phasen können stöchiometrisch zusammengesetzt sein, sie können aber ebenso gut Mischkristallbereiche bilden und eine geordnete oder ungeordnete Verteilung aufweisen.
Die aus dem eingangs genannten Stand der Technik bekannten Schichten aus Platin oder Palladium sind reine metallische Schichten und nicht intermetallisch.

Die Sperrschicht 7 kann in bevorzugter Weiterbildung der Erfindung überwiegend aus einer intermetallischen Phase bestehen, also aus einer Matrix mit einer der intermetallischen Phasen Ta₂Al, NbAl₂ oder Nb₃Al, es können aber auch mehrere dieser Phasen in einem Phasengemisch vorhanden sein. Die Matrix der Sperrschicht 7 kann beispielsweise nanokristallin ausgebildet sein.

Ebenso können die intermetallischen Phasen als Partikel in einer anderen metallischen Matrix, beispielsweise in einer Superlegierung des Substrats 4 oder einer MCrAlX-Legierung, vorhanden sein, insbesondere in nanokristalliner Form, also mit Korngrößen <500nm, insbesondere <300nm oder <100nm.

Zur Herstellung der intermetallischen Sperrschicht 7 kann auch zuerst Ta oder Nb auf das Substrat 4 aufgebracht und dann alitiert werden und dann das aufgebrachte Material durch geeignete Wärmebehandlungen in eine intermetallische Phase überführt werden. Weiteres Beispiel ist eine Platin-basierte intermetallische Phase.

Die Sperrschicht 7 ist insbesondere dünn gegenüber der Schutzschicht 10 ausgeführt, also ≤ 50µm, insbesondere ≤ 5µm und wird beispielsweise elektrolytisch und/oder mit Pulverpartikeln, insbesondere Nanopartikeln hergestellt, sodass die dünnen Schichtdicken erreicht werden können und die Sperrschicht 7 nicht nur aus einer oder wenigen Schichtlagen von mikrometergroßen Partikeln besteht.

Eine Schicht 10 aus der Legierung MCrAlX ist beispielsweise etwa 300µm dick, sodass die Dicken der Sperrschicht 7 sinnvoller Weise zwischen 1 und 17% der Dicke der Schicht 10 liegt. Dies gilt ganz allgemein für die Sperrschicht 7 und die darüber liegende Schutzschicht 10.

Die intermetallischen Phasen weisen eine hohe Schmelztemperatur auf, sodass sie bei den hohen Einsatztemperaturen ihre Strukturen beibehalten und sich nicht durch Interdiffusion auflösen.

Die Sperrschicht 7 ist insbesondere durch Wahl der Materialien oder Morphologie auch superplastisch, insbesondere bei den hohen Temperaturen, was beispielsweise durch eine nanokristalline Struktur (Korngrößen) erreicht werden kann.

Die Plastizität ist wichtig, damit keine rissanfällige Sperrschicht 7 geschaffen wird, die die mechanische Festigkeit oder den Korrosionsschutz des Schichtsystems 1 verringert.

Die Sperrschicht 7 kann auf verschiedene Art und Weise hergestellt werden.

Beispielsweise wird ein Schlicker verwendet, um die Sperrschicht 7 herzustellen. Ein Schlicker besteht aus Pulverteilchen (beispielsweise teilweise oder vollständig nanokristallin) des Materials der Sperrschicht 7, einem Trägermittel (bspw. Wasser, Alkohol) und gegebenenfalls einem Bindemittel (bspw. Harz).
Dieser Schlicker kann auf die Oberfläche des Substrats 4 aufgepinselt oder aufgesprüht werden. Bei seiner Trocknung entweicht das Trägermittel und das Bindemittel wird gegebenenfalls noch ausgebrannt. Danach wird eine Verdichtungs- und Anbindungswärmebehandlung durchgeführt.

Ebenso kann die Sperrschicht 7 durch ein elektrolytisches Verfahren aufgebracht werden, bei dem beispielsweise Pulverpartikel (teilweise oder vollständig nanokristallin), in einem Elektrolyt dispergiert sind und abgeschieden werden und/oder bei dem einige oder alle Elemente der Sperrschicht 7 in dem Elektrolyt gelöst sind und sich aus der Lösung heraus auf dem Substrat 4 abscheiden. Auch hier kann eine nachfolgende Wärmebehandlung stattfinden.

Figur 2 zeigt in perspektivischer Ansicht eine Laufschaufel 120 oder Leitschaufel 130 einer Strömungsmaschine 100 (Figur 4), die sich entlang einer Längsachse 121 erstreckt.

Die Strömungsmaschine kann eine Gasturbine eines Flugzeugs oder eines Kraftwerks 100 zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium (Si) und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Als Schutz gegen Korrosion weist die Schaufel 120, 130 beispielsweise entsprechende meistens metallische Beschichtungen (MCrAlX) auf und als Schutz gegen Wärme meistens noch eine keramische Beschichtung.

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein.
Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1204776 B1, EP 1306454, EP 1319729 A1, WO 99/67435 oder WO 00/44949 bekannt.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem (1),
das zumindest besteht aus:
einem Substrat (4),
wobei das Substrat eine Superlegierung aus einer eisen-, kobalt- oder nickelbasierten Superlegierung darstellt, einer Schutzschicht (10) auf dem Substrat (4), insbesondere mit einer Wärmedämmschicht (13) auf der Schutzschicht (10),
einer Sperrschicht (7) zwischen dem Substrat (4) und der Schutzschicht (10),
**dadurch gekennzeichnet,**
**dass** die Sperrschicht (7) zumindest teilweise als intermetallische Phase ausgebildet ist,
**dass** die intermetallische Phase aus der Gruppe Ta₂Al, NbAl₂ oder Nb₃Al ausgewählt ist und
**dass** die Schutzschicht (10) aus einer MCrAlX-Legierung besteht,
wobei M zumindest ein Element aus der Gruppe Eisen (Fe), Nickel (Ni) oder Kobalt (Co) darstellt und
wobei X ein Aktivelement ist und für Yttrium (Y) und/oder Silizium und/oder zumindest ein Element der Seltenen Erden bzw. Hafnium steht.

2. Schichtsystem nach Anspruch 1,
**dadurch gekennzeichnet, dass**
die Sperrschicht (7) überwiegend aus zumindest einer intermetallischen Phase besteht.

3. Schichtsystem nach Anspruch 1,
**dadurch gekennzeichnet, dass**
die Sperrschicht (7) eine metallische Matrix aufweist, die Partikel aus einer intermetallische Phase aufweist.

4. Schichtsystem nach Anspruch 1, 2 oder 3,
**dadurch gekennzeichnet, dass**
die Sperrschicht (7) nur eine intermetallische Phase aufweist.

5. Schichtsystem nach Anspruch 1,
**dadurch gekennzeichnet, dass**
die Sperrschicht (7) ausschließlich aus einer oder mehreren intermetallischen Phasen gebildet ist.

6. Schichtsystem nach Anspruch 1, 2, 3, 4 oder 5,
**dadurch gekennzeichnet, dass**
die Sperrschicht (7) gegenüber der Schutzschicht (10) dünn ausgeführt ist,
insbesondere nur bis zu 50µm, insbesondere ≤ 5µm dick ist.

7. Schichtsystem nach Anspruch 1 oder 6,
**dadurch gekennzeichnet, dass**
die Dicke der Sperrschicht (7) 1 - 17% der Dicke der Schutzschicht (10) beträgt.

8. Schichtsystem nach einem oder mehreren der vorhergehenden Ansprüche,
**dadurch gekennzeichnet, dass**
die Sperrschicht (7) aus nanokristallinen Partikeln mit intermetallischer Phase besteht,
die insbesondere Korngrößen kleiner 500nm aufweisen.

9. Schichtsystem nach einem oder mehreren der vorhergehenden Ansprüche,
**dadurch gekennzeichnet, dass**
die Sperrschicht (7) superplastische Eigenschaften aufweist.

10. Schichtsystem nach Anspruch 1 oder 9,
**dadurch gekennzeichnet, dass**
das Schichtsystem (1) ein Bauteil einer Turbine, insbesondere einer Dampf- oder Gasturbine (100), insbesondere eine Turbinenschaufel (120, 130) oder ein Hitzeschildelement (155) ist.

11. Verfahren zur Herstellung eines Schichtsystems nach einem oder mehreren der vorhergehenden Ansprüche 1 bis 10,
**dadurch gekennzeichnet, dass**
ein Schlicker verwendet wird,
um die Sperrschicht (7) herzustellen.

12. Verfahren nach Anspruch 9,
**dadurch gekennzeichnet, dass**
der Schlicker auf das Substrat (4) aufgepinselt wird.

13. Verfahren nach Anspruch 9,
**dadurch gekennzeichnet, dass**
der Schlicker aufgesprüht wird.

14. Verfahren zur Herstellung eines Schichtsystems nach einem oder mehreren der vorhergehenden Ansprüche 1 bis 9,
**dadurch gekennzeichnet, dass**
die Sperrschicht (7) durch ein elektrolytisches Verfahren hergestellt wird. ,

15. Verfahren nach Anspruch 14,
**dadurch gekennzeichnet, dass**
Pulverpartikel,
bestehend aus einem Material für die Sperrschicht (7) in einem Elektrolyt dispergiert sind,
abgeschieden werden.

16. Verfahren nach Anspruch 14 oder 15,
**dadurch gekennzeichnet, dass**
die abzuscheidende Elemente der Sperrschicht (7) in einem Elektrolyten gelöst sind.

17. Verfahren nach Anspruch 11 bis 16,
**dadurch gekennzeichnet, dass**
eine Anbindungswärmebehandlung der Sperrschicht (7) an das Substrat (4) durchgeführt wird.

## Claims

1. Layer system (1),
which at least comprises:
a substrate (4),
the substrate being a superalloy comprising an iron-base, cobalt-base or nickel-base superalloy,
a protective layer (10) on the substrate (4),
in particular with a thermal barrier coating (13) on the protective layer (10),
a blocking layer (7) between the substrate (4) and the protective layer (10),
**characterized**
**in that** the blocking layer (7) is at least partially formed as an intermetallic phase,
**in that** the intermetallic phase is selected from the group consisting of Ta₂Al, NbAl₂ or Nb₃Al, and
**in that** the protective layer (10) consists of a MCrAlX alloy,
M representing at least one element selected from the group consisting of iron (fe), nickel (Ni) or cobalt (Co) and
X being an active element and representing yttrium (Y) and/or silicon and/or at least one rare earth element, or hafnium.

2. Layer system according to Claim 1, **characterized in that** the blocking layer (7) predominantly comprises at least one intermetallic phase.

3. Layer system according to Claim 1, **characterized in that** the blocking layer (7) has a metallic matrix which includes particles of an intermetallic phase.

4. Layer system according to Claim 1, 2 or 3, **characterized in that** the blocking layer (7) includes only one intermetallic phase.

5. Layer system according to Claim 1, **characterized in that** the blocking layer (7) is formed exclusively from one or more intermetallic phases.

6. Layer system according to Claim 1, 2, 3, 4 or 5, **characterized in that** the blocking layer (7) is designed to be thin compared to the protective layer (10), in particular is only up to 50 µm, in particular ≤ 5 µm thick.

7. Layer system according to Claim 1 or 6, **characterized in that** the thickness of the blocking layer (7) is 1 - 17% of the thickness of the protective layer (10).

8. Layer system according to one or more of the preceding claims, **characterized in that** the blocking layer (7) comprises nanocrystalline particles with intermetallic phase, which in particular have grain sizes of less than 500 nm.

9. Layer system according to one or more of the preceding claims, **characterized in that** the blocking layer (7) has superplastic properties.

10. Layer system according to Claim 1 or 9, **characterized in that** the layer system (1) is a component of a turbine, in particular of a steam or gas turbine (100), in particular a turbine blade or vane (120, 130) or a heat shield element (155).

11. Process for producing the layer system according to one or more of the preceding Claims 1 to 10, **characterized in that** a slurry is used to produce the blocking layer (7).

12. Process according to Claim 9, **characterized in that** the slurry is brushed onto the substrate (4).

13. Process according to Claim 9, **characterized in that** the slurry is sprayed on.

14. Process for producing the layer system according to one or more of the preceding Claims 1 to 9, **characterized in that** the blocking layer (7) is produced by an electrolytic process.

15. Process according to Claim 14, **characterized in that** powder particles, consisting of a material for the blocking layer (7) dispersed in an electrolyte, are deposited.

16. Process according to Claim 14 or 15, **characterized in that** the elements of the blocking layer (7) which are to be deposited are dissolved in an electrolyte.

17. Process according to Claims 11 to 16, **characterized in that** a heat treatment for bonding the blocking layer (7) to the substrate (4) is carried out.

## Revendications

1. Système (1) stratifié,
constitué au moins :
d'un substrat (4),
le substrat constituant un superalliage en un superalliage à base de fer, de cobalt ou de nickel,
d'une couche (10) de protection sur le substrat (4),
ayant notamment une couche (13) calorifuge sur la couche (10) de protection,
d'une couche (7) d'arrêt entre le substrat (4) et la couche (10) de protection,
**caractérisé**
**en ce que** la couche (7) d'arrêt est constituée au moins en partie sous la forme d'une phase intermétallique,
**en ce que** la phase intermétallique est choisie dans le groupe Ta2A1, NbAl2 ou Nb3Al et
**en ce que** la couche (10) de protection est en un alliage de MCrAlX
M représentant au moins élément du groupe fer (Fe), nickel ( Ni) ou cobalt (Co) et
dans lequel X est un élément actif et représente l'yttrium (Y ) et/ou le silicium et/ou au moins un élément de terre rare ou l'hafnium.

2. Système stratifié suivant la revendication 1,
**caractérisé en ce que**
la couche (7) d'arrêt est constituée d'une manière prépondérante d'au moins une phase intermétallique.

3. Système stratifié suivant la revendication 1,
**caractérisé en ce que**
la couche (7), d'arrêt a une matrice métallique qui a des particules en une phase intermétallique.

4. Système stratifié suivant la revendication 1, 2 ou 3
**caractérisé en ce que**
la couche (7) d'arrêt a seulement une phase intermétallique.

5. Système stratifié suivant la revendication 1, **caractérisé en ce que**
la couche (7) d'arrêt est formée exclusivement d'une ou plusieurs phases intermétallique.

6. Système stratifié suivant la revendication 1, 2, 3, 4 ou 5,
**caractérisé en ce que**
la couche (7) d'arrêt est mince par rapport à la couche (10 ) de protection,
en ayant notamment une épaisseur allant jusqu'à 50µm, notamment inférieure ou égale à 5µm.

7. Système stratifié suivant la revendication 1 ou 6,
**caractérisé en ce que**
l'épaisseur de la couche (7) d'arrêt représente de 1 à 17 % de l'épaisseur de la couche (10) de protection.

8. Système stratifié suivant l'une des revendications précédentes,
**caractérisé en ce que**
la couche (7) d'arrêt est en particules nanocristallines ayant une phase intermétallique,
qui a notamment des granulométries plus petites que 500 nm.

9. Système stratifié suivant l'une des revendications précédentes,
**caractérisé en ce que**
la couche (7) d'arrêt a des propriétés superplastiques.

10. Système stratifié suivant la revendication 1 ou 9,
**caractérisé en ce que**
le système (1) stratifié est un élément d'une turbine, notamment d'une turbine (100) à vapeur ou à gaz, notamment d'une aube (120, 130) de turbine ou d'un élément (155) de bouclier thermique.

11. Procédé de production d'un système stratifié suivant l'une ou plusieurs revendications précédentes 1 à 10,
**caractérisé en ce que**
on utile une suspension,
pour produire la couche (7) d'arrêt.

12. Procédé suivant la revendication 9,
**caractérisé en ce que**,
on applique la suspension au pinceau sur le substrat (4).

13. Procédé suivant la revendication 9,
**caractérisé en ce que**,
l'on pulvérise la suspension.

14. Procédé de production d'un système stratifié suivant l'une ou plusieurs des revendications précédentes 1 à 9,
**caractérisé en ce que**,
on produit la couche (7) d'arrêt par un procédé électrolytique.

15. Procédé suivant la revendication 14,
**caractérisé en ce que**,
on dépose des particules de poudre en un matériau pour la couche (7) d'arrêt, dispersées dans un électrolyte.

16. Procédé suivant la revendication 14 ou 15,
**caractérisé en ce que**,
l'on dissout les éléments à déposer de la couche (7) d'arrêt dans un électrolyte.

17. Procédé suivant la revendication 11 à 16,
**caractérisé en ce que**,
l'on effectue un traitement thermique de liaison de la couche (7) d'arrêt au substrat (4).
